# EUROPEAN PATENT APPLICATION

(11) **EP 2 515 399 A1**
(43) Date of publication of application: **24.10.2012**
(21) Application number: 11162766.7
(22) Date of filing: 18.04.2011
(51) Int. Cl.: H02B 13/025

(54) **Protection filter assembly for a switchgear panel and switchgear panel comprising the same**

(71) Applicant: ABB Technology AG, 8050 Zürich (CH)
(72) Inventor: Carelli, Vittorio, 26900, Lodi (IT); Peracchi, Fabrizio, 24121, Albino (BG) (IT)
(74) Representative: De Santis, Giovanni

(57) **Abstract**

Protection filter assembly (1) for a switchgear panel (2), comprising: an enclosure (5) defining an evacuating path for conveying out of the switchgear panel a flow of flames, gases, particulates which may originate in case of explosions or electric arcing events occurring inside the switchgear panel. Mitigating barrier elements (12) are provided for mitigating the intensity of the flow which barriers are distributed along the evacuating path so as to define a plurality of expansion chambers for progressively expanding the flow along the evacuating path itself.

## Description

The present disclosure relates to a protection filter assembly for a switchgear panel and a switchgear panel comprising such a protection filter assembly. The protection filter assembly of the disclosure is configured for effectively mitigating the effects resulting from explosions and especially from possible electric arcs striking inside the enclosure, e.g. hot gases, flames, particulates of melted copper, plastics et cetera.

The protection filter assembly is particularly suitable to be used in the Medium or High Voltage field, i.e. for applications in the range of up to about 50 kV.

A switchgear panel, also indicated in the art with the equivalent terms of electric switchboard, or simply switchgear or electric panel, usually comprises a metallic enclosure that is internally divided into several compartments or cells housing various apparatuses and equipments, such as a circuit breaker, main cables, such as bus-bars feeding power from an electrical source, a system of cables suitable to be connected to a load, for example an electrical motor. Depending on the applications, switchgear panels may comprise other components, such as current transformers, fuses, voltage transformers, et cetera.

During the working life of a switchgear panel, it is possible that some electrical faults or malfunctioning occur, such as short circuits, current overloads, and in particular arcing events. Arcing events, e.g. arcing faults or flashes, occur when electric current arcs strike for instance between two conductors inside the switchgear cabinet, e.g. between phase conductors, phase and neutral conductors, between the contacts of the circuit breaker used, or between a conductor and ground, etcetera. When arcing faults occur, in particular in medium or high-voltage power applications wherein levels of energy involved are quite significant, the ionized gas associated with them may be released at pressures and temperatures sufficient to severely damage or destroy the switchgear panel itself, and/or the devices and equipment housed inside, and they can be also potentially dangerous for operating personnel or equipment outside the enclosure. In particular, the materials involved in or exposed to the arc produce hot decomposition products, both gaseous and particulate either of plastics and/or metallic material, which may be discharged to the outside of the enclosure together with or in addition to hot gases and flames.

Due to these problems, sever safety standards and related tests have been introduced; for instance, one typical standard test foresees the use of highly flammable indicators, such as pieces of cotton or equivalent material, which are placed outside the switchgear enclosure around the perimeter of the enclosure at a certain distance from some or all of its lateral walls. During the test when an internal arc is caused to strike, these flammable indicators must not ignite.

Hence, such standards have imposed onto switchgear manufactures the adoption of protection systems suitable to prevent and/or mitigate the effect of possible electric arcs.

An arc protection assembly is known comprising paths for channelling and venting the hot gases and flames generated by an arcing fault out from the internal compartments towards a desired area. The known arc protection assembly comprises flaps or ducts which lead the hot gases, flames and particulate to the outside environment through the ceiling of the enclosure, in a zone far away from possible presence of operating personnel.

Although such an arc protection assembly provides a certain mitigation effect against arcing events, there is still need and desire for further improvements.

This desire is fulfilled by a protection filter assembly for a switchgear panel, comprising:
- an enclosure defining an evacuating path for conveying out of said switchgear panel a flow of flames and/or gases and/or particulates which may originate in case of explosions or electric arcing events occurring inside said switchgear panel;
- mitigating barrier elements for mitigating the intensity of said flow, said mitigating barrier elements being distributed along said path so as to define a plurality of expansion chambers for said flow along the evacuating path.

Detailed characteristics and advantages will become apparent from the description of some preferred but not exclusive embodiments of a protection filter assembly according to the present disclosure, illustrated only by way of non-limitative examples with the accompanying drawings, wherein:
Figure 1 is a schematic perspective view of a switchgear panel comprising a protection filter assembly according to the disclosure;

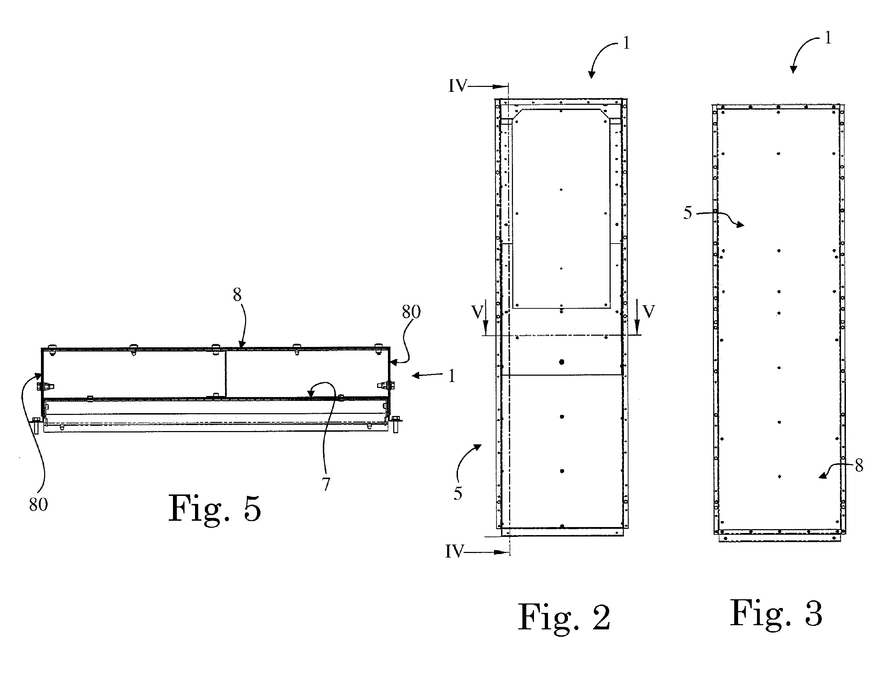

Figure 2 is a view of the protection filter assembly from a side intended to face a rear portion of the switchgear panel;
Figure 3 is a view of the protection filter assembly from a side opposite to that of Figure 2;
Figure 4 is a longitudinal vertical cross-section of the protection filter assembly taken along the plane IV-IV in Figure 2;
Figure 5 is a transverse horizontal cross-section of the protection filter assembly taken along the plane V-V in Figure 2;
Figure 6 shows an enlarged detail of Figure 4;
Figure 7 is an enlarged view of Figure 4;
Figure 8 is a perspective view of part of the protection filter assembly, in particular showing mitigating barrier elements;
Figures 9 and 10 are a front view and a side view respectively of the part shown in Figure 8;
Figures 11 and 12 show enlarged details of the mitigating barrier elements in Figure 8;
Figures 13 to 16 show further portions, in particular an internal plate wall of the protection filter assembly;

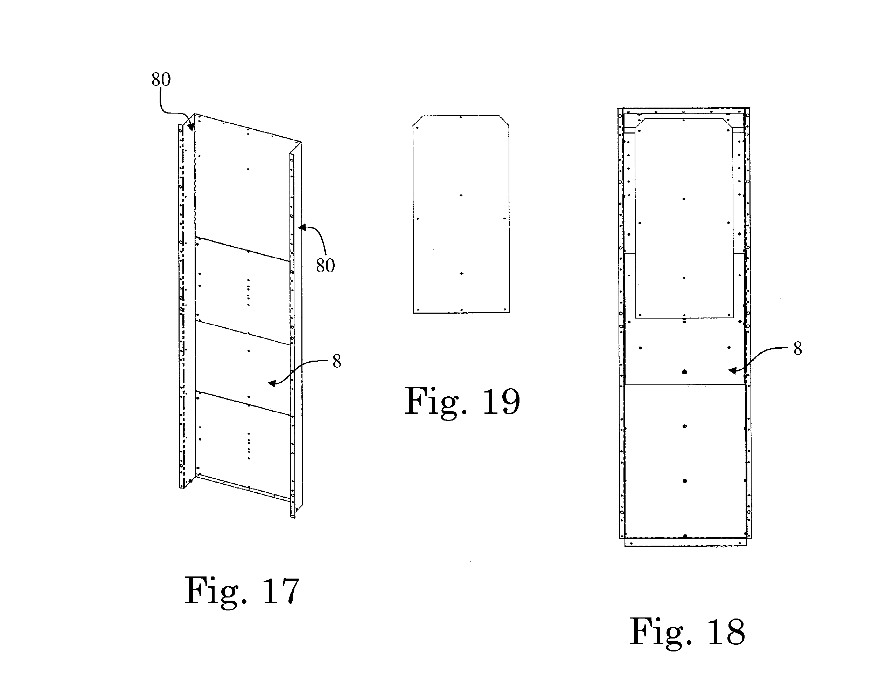

Figures 17 to 19 show further portions, in particular an external plate wall, of the protection filter assembly according to the disclosure;
Figures 20 to 23 show further mitigating barrier elements included in the protection filter assembly;
Figures 24 to 27 are different views of a bottom portion included in the protection filter assembly according to the disclosure.

With reference to the attached Figures, a protection filter assembly 1 and a switchgear panel 2 comprising such a protection filter assembly 1 are shown.

The protection filter assembly 1 is configured for being preferably mounted on a rear portion 3 of the switchgear panel 2, opposite to a front portion 4 of switchgear panel 2 which is accessible to an operator.

The protection filter assembly 1 comprises a plurality of walls defining an enclosure 5 which, in the exemplary but non-limitative embodiment illustrated in the figures, has a parallelepid shape.

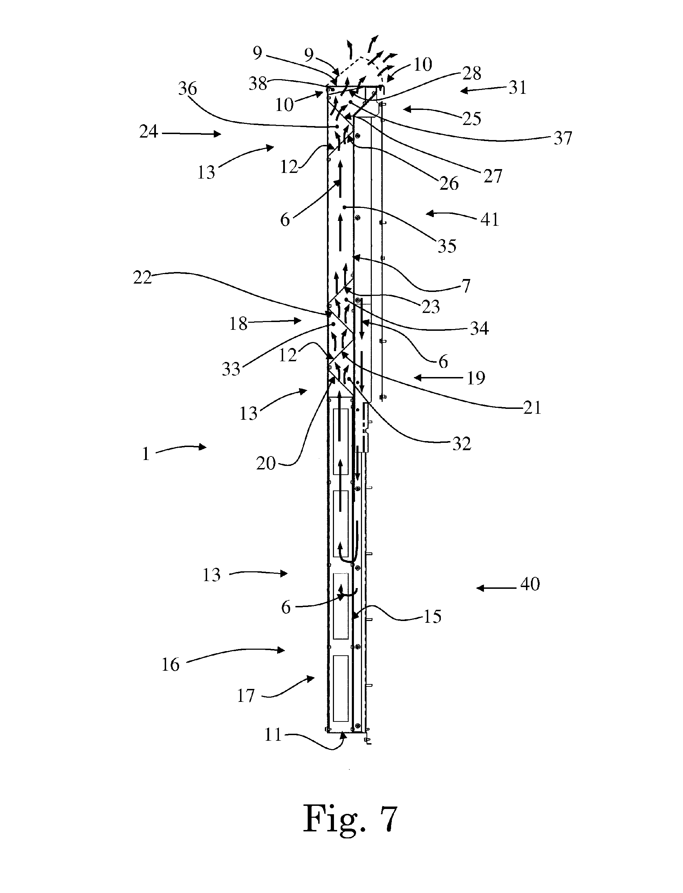

The enclosure 5, as will be better disclosed later on, is shaped so as to define an evacuating path 6 (better shown in Figure 7) for conveying out of the switchgear panel 2 a flow of flames and/or gases and/or particulates which may originate in case of explosions or electric arcing events occurring inside the switchgear panel 2.

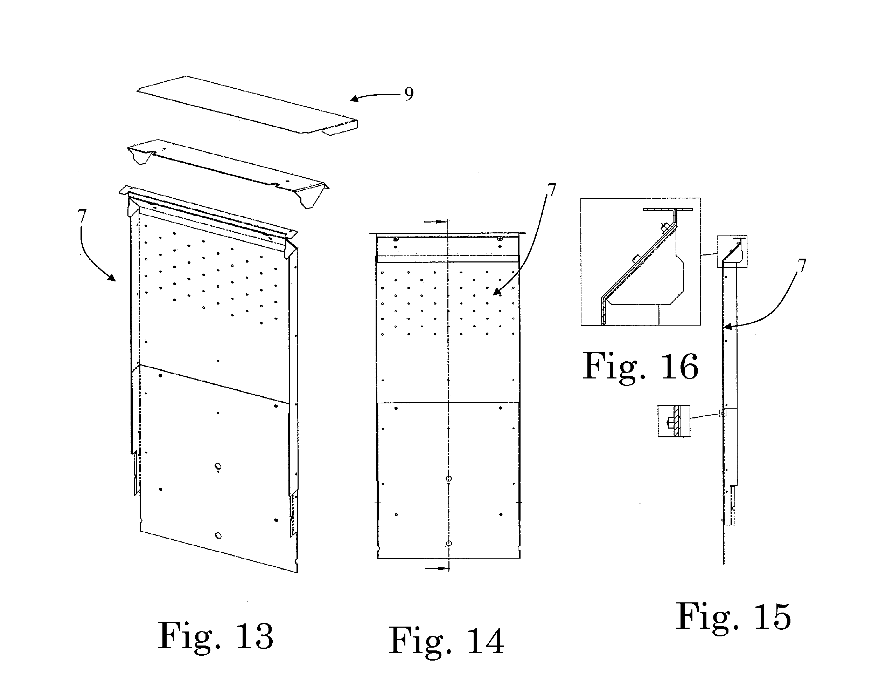

In the exemplary embodiment illustrated, the evacuating path 6 is at least partially delimited by a vertical internal plate wall 7 of the enclosure 5, which is better shown in Figures 13 to 16 and is configured for being mounted on the switchgear panel 2 near an internal zone of the latter, and by a vertical external plate wall 8 of the enclosure 5, which is arranged externally with respect to the switchgear panel 2.

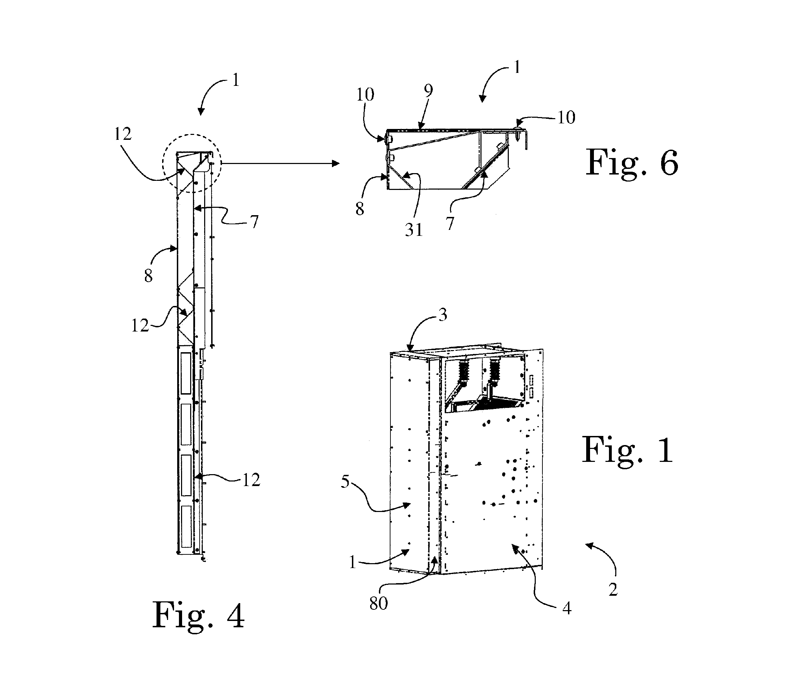

Furthermore, the enclosure 5, in its upper side, is delimited by a top cover 9, better shown in Figures 6 and 7, which is connected by fixing elements 10 to the external plate wall 8 and to the internal plate wall 7. In particular, the fixing elements comprise frangible fixing elements 10 which are configured for giving way in case of explosions in the switchgear panel 2, in order to let the flow vent outside.

The enclosure 5, in its lower side, is delimited by a bottom cover 11, which is better shown in

Figures 7, and 24 to 27, and laterally by side walls 80.

The protection filter assembly 1 comprises mitigating barrier elements 12 for mitigating the intensity of the flow of flames and/or gases and/or particulates which may originate in case of explosions and in particular of electric arcing events in the switchgear panel 2. The mitigating barrier elements 12 are distributed along the evacuating path 6 for the flow, so as to delimit, together with the enclosure walls, a plurality of expansion chambers 13 which act for progressively expanding the abovementioned flow in order to deaden pressure and temperature thereof and thus mitigate its undesired effects. In particular, the mitigating barrier elements 12 extend from the internal plate wall 7 to the external plate wall 8.

The mitigating barrier elements 12, and the expansion chambers defined thereby, effectively act for protecting surrounding zones of the switchgear panel 2 and, especially, any personnel working near the switchgear panel 2 from potentially dangerous events. In particular, the mitigating barrier elements 12 define a bank of expansion chambers 13 arranged in succession to one other along the evacuating path 6.

The mitigating barrier elements 12 are configured as filter elements, each filter element comprising a plurality of venting through openings 14 which are traversable by the abovementioned flow and which act for keeping particulates of the flow having dimensions above given values.

In particular, the mitigating barrier elements 12 or filter elements are shaped as baffles. A more detailed description of such venting through openings 14 will follow later on.

The mitigating barrier elements 12 comprises a first filter baffle 15, better shown in Figures 7 to 10 , which, in use, is for instance vertically arranged parallel to the external plate wall 7.

The internal plate wall 7 overlaps an upper part of the first filter baffle 15; therefore, the flow of gases and other substances above mentioned may pass through the first filter baffle 15 in a lower half zone 40 thereof. A first expansion stage 16 for the flow is associated with the first filter baffle 15.

The mitigating barrier elements 12 comprise a group 18 of middle filter baffles defining intermediate expansion stages 19 for the flow. The group 18 comprises a first middle filter baffle 20, a second middle filter baffle 21, a third middle filter baffle 22 and a fourth middle filter baffle 23.

The first filter baffle 15 delimits, together with the side walls 80, with the external plate wall 8 and with the first middle filter baffle 20 a first expansion chamber 17 with which the above mentioned first expansion stage 16 is associated.

The first middle filter baffle 20, the second middle filter baffle 21 the third middle filter baffle 22 and the fourth middle filter baffle 23 are arranged consecutively to one other. In particular, these baffles are transversely arranged to one other according to alternating lying planes. In the exemplary and non-limitative embodiment shown in the attached Figures, the baffles are oriented according to a zigzag pattern.

The first filter baffle 15 and the group 18 of middle filter baffles, in a non limitative version, are part of a one piece element, in particular of a one-piece-metal-sheet-element 30 which is suitably folded as visible in particular in Figures 7, 8 to 10.

The mitigating barrier elements 12 comprise a group 24 of terminal filter baffles defining terminal expansion stages 25 for the flow.

The group 24 comprises a first terminal filter baffle 26, a second terminal filter baffle 27 and a third terminal filter baffle 28, which are arranged consecutively after one other and transversely arranged to one other according to different lying planes. The first terminal filter baffle 26, the second terminal filter baffle 27 and the third terminal filter baffle 28, in a non limitative version, are part of a further one piece element 31, in particular of a one-piece-metal-sheet-element 31. The one-piece-metal-sheet-element 31 is folded as visible in particular in Figures 7, 20 to 23.

Between the first middle filter baffle 20 and the second middle filter baffle 21 there is defined a second expansion chamber 32 for the flow.

Between the second middle filter baffle 21 and the third middle filter baffle 22 there is defined a third expansion chamber 33 for the flow.

Between the third middle filter baffle 22 and the fourth middle filter baffle 23 there is defined a fourth expansion chamber 34 for the flow.

Between the fourth middle filter baffle 23 and the first terminal filter baffle 26 there is defined a fifth expansion chamber 35 for the flow.

Between the first terminal filter baffle 26 and the second terminal filter baffle 27 there is defined a sixth expansion chamber 36 for the flow.

Between the second terminal filter baffle 27 and the third terminal filter baffle there is defined a seventh expansion chamber 37 for the flow.

An eight expansion chamber 38 is defined between the third terminal filter baffle 28 and the removable top cover 9 of the enclosure 5.

In an exemplary embodiment, through openings may also be obtained in an upper zone 41 of the vertical internal plate wall 7 so that the latter acts as a preliminary filter barrier enabling only a first fraction of the flow to pass there through, the remaining part of the flow being constrained to run downwards along the above described evacuating path 6.

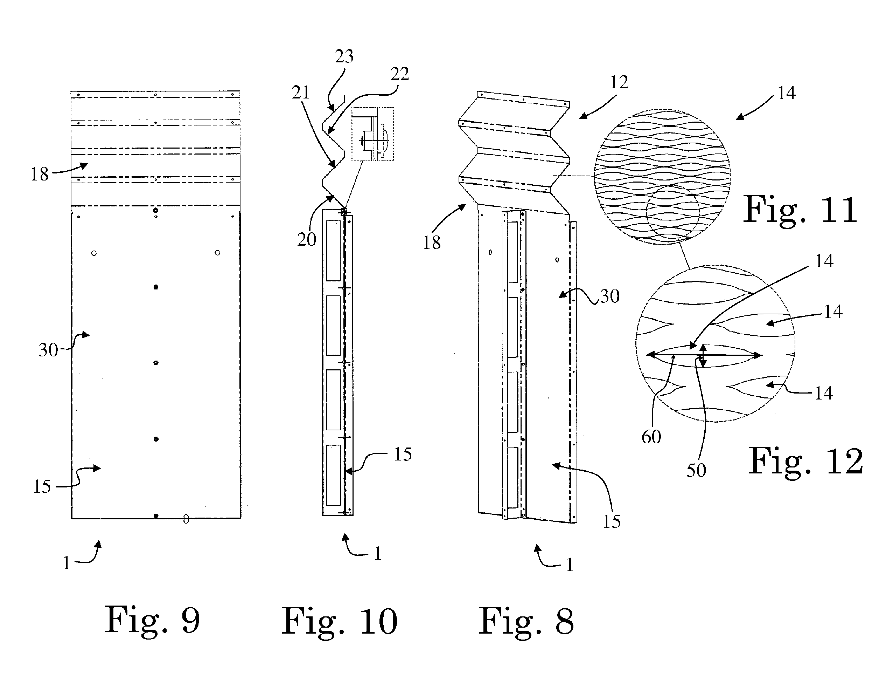

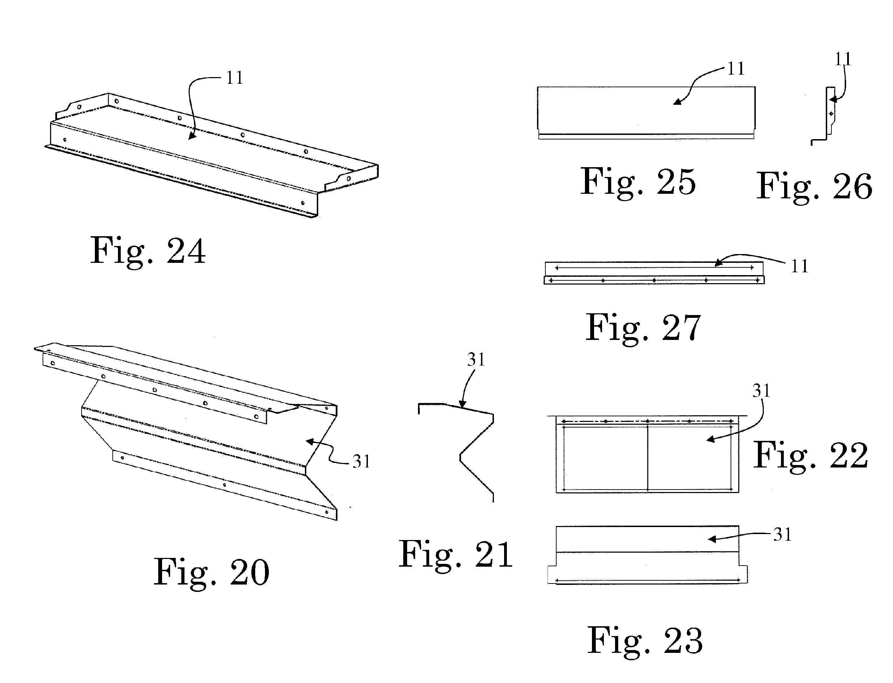

In an exemplary embodiment, the mitigating barrier elements 12 are made of expanded or stretched metal plates obtained by multi-cut perforation and subsequent stretching of the material. The barrier elements 12, including the one-piece metal sheet element 30, better shown in Figures 8 to 12, and the further one-piece sheet element 31, better shown in Figure 20, are configured so as to resemble wire netting elements having meshes ( i.e. the venting through openings 14) of suitable dimensions. The venting through openings 14, as shown in Figures 11 and 12, may have, for example, a substantially rhomboidal or elliptical shape with a width dimension 50 and a length dimension 60, the length dimension 60 being greater than the width dimension 50. The venting through openings 14 have dimensions such as to prevent passage of particles with diameter not less than 2.5mm. Preferably, the venting through openings 14 have dimensions such as to prevent passage of particles with diameter greater than 2.4 mm. In this case the width dimension 50 is equal to 2.4 mm. Figures 11 and 12, although referring explicitly to the one-piece metal sheet 30 in Figure 8, have to be assumed to show enlarged details of the mitigating barrier elements 12 as a whole, therefore including also the further one-piece metal sheet element 31.

During functioning, in case of explosions or arcing events inside the switchgear, the flow runs downwards parallel to the internal plate wall 7 and then turns upwards by crossing the first filter baffle 15 and goes into the first expansion chamber 17. In this phase the flow undergoes a first expansion and a first fraction of any coarse particulates are retained by the first filter baffle 15. Subsequently, the flow advances along the evacuating path 6 upwards and intercepts in succession the first middle filter baffle 20, the second middle filter baffle 21, the third middle filter baffle 22 and the fourth middle filter 23, thus running along the second expansion chamber 32, the third expansion chamber 33, the fourth expansion chamber 34 and the fifth expansion chamber 35 respectively, where the flow is furthermore progressively expanded and further particles can be retained.

In a last portion of the evacuating path, the flow crosses the first terminal filter baffle 26, then the second terminal filter baffle 27 and the third terminal filter baffle 28, thus running along the sixth expansion chamber 36, the seventh expansion chamber 37, and the eighth expansion chamber 38. At the end, the flow exerts a pressure on the top cover 9 which can be removed from the enclosure upon breaking of the frangible fixing elements 10.

The mitigating barrier elements 12 of the present disclosure prove to be very effective during functioning and very cheap to be produced. The mitigating barrier elements 12 provide a high ratio between passage area for the flow and the total area of the barriers, and at the same time an effective filtering action.

The number, position, dimensions and structural configuration of the mitigating barrier elements 12 above disclosed provide a highly effective mitigating effect on the pressure and temperature of the above mentioned flow. However, different configurations may also be envisaged. For example, it may be possible to choose venting through openings 14 configured for preventing passage of particulates of the flow having average diameter grater than 1 mm. The protection filter assembly 1 according to the disclosure above described fully achieves the intended aims of providing a protection filter assembly which is structurally simplified, easy to be mounted on a switchgear apparatus, and able to efficiently prevent undesired damages and accidents.

The protection filter assembly 1 thus conceived may undergo numerous modifications and come in several variants, all falling within the scope of the inventive concept as defined by the appended claims; for example, the various barrier elements and/or expansion chambers may be differently shaped or in a different number, or they may be differently positioned with respect to each other and to the associated enclosure, or differently connected; the filter assembly 1 can be connected to another wall of the switchgear panel 1, for instance a side wall, et cetera. The component materials and dimensions may be of any type, according to needs and the state of the art and provided they are compatible with the scope of the present disclosure.

## Claims

1. Protection filter assembly (1) for a switchgear panel (2), comprising:
- an enclosure (5) defining an evacuating path (6) for conveying out of said switchgear panel (2) a flow of flames and/or gases and/or particulates which may originate in case of explosions or electric arcing events occurring inside said switchgear panel (2);
- mitigating barrier elements (12) for mitigating the intensity of said flow, said mitigating barrier elements (12) being distributed along said path (6) so as to define a plurality of expansion chambers (13) for said flow along the evacuating path.

2. Protection filter assembly (1) according to claim 1, wherein the expansion chambers (13) of said plurality of expansion chambers define a bank of chambers (13) arranged in succession one after another along said path (6).

3. Protection filter assembly (1) according to one or more of claims 1 or 2, wherein said mitigating barrier elements comprise filter elements (12) each comprising a plurality of venting through openings (14) traversable by said flow.

4. Protection filter assembly (1) according to claim 3, wherein said filter elements (12) comprise a first filter baffle (15) defining, with respect to said path (6), a first expansion stage (16) for said flow, a group (18) of middle filter baffles defining intermediate expansion stages (19), and a group (24) of terminal filter baffles defining terminal expansion stages (25) for said flow.

5. Protection filter assembly (1) according to claim 4, wherein said group (18) of middle filter baffles comprises a first middle filter baffle (20), a second middle filter baffle (21) a third middle filter baffle (22) and a fourth middle filter baffle (23) arranged consecutively to one other.

6. Protection filter assembly (1) according to claim 4 or 5, wherein said group (24) of terminal filter baffles comprises a first terminal filter baffle (26), a second terminal filter baffle (27) and a third terminal filter baffle (28) arranged consecutively one after another.

7. Protection filter assembly (1) according to claim 6, wherein a first expansion chamber (17) is defined between said first filter baffle (15) and said first middle filter baffle (20), a second expansion chamber (32) is defined between said first middle filter baffle (20) and said second middle filter baffle (21), a third expansion chamber (33) is defined between said second middle filter baffle (21) and said third middle filter baffle (22), a fourth expansion chamber (34) is defined between said third middle filter baffle (22) and said fourth middle filter baffle (23), a fifth expansion chamber (35) is defined between said fourth middle filter baffle (23) and said first terminal filter baffle (26), a sixth expansion chamber (36) is defined between said first terminal filter baffle (26) and said second terminal filter baffle (27), a seventh expansion chamber (37) is defined between said second terminal filter baffle (27) and said third terminal filter baffle (28) and a eight expansion chamber (38) is defined between said third terminal filter baffle (28) and a removable end top element (9) of said enclosure (5).

8. Protection filter assembly (1) according to claim 7, wherein said first middle filter baffle (20), said second middle filter baffle (21) said third middle filter baffle (22) said fourth middle filter baffle (23), said first terminal filter baffle (26), said second terminal filter baffle (27) and said third terminal filter baffle (28) are transversely arranged to one other according to alternating lying planes.

9. Protection filter assembly (1) according to one or more of claims 4 to 8, wherein the baffles of said group (18) of middle filter baffles and the baffles of said group (24) of terminal filter baffles are oriented according to a zigzag pattern.

10. Protection filter assembly (1) according to one or more of claims 4 to 9, wherein the baffles of said group (18) of middle filter baffles and the baffles of said group (24) of terminal filter baffles extend transversely from an internal plate wall (7) of said enclosure (5), configured for being arranged closer to an internal zone of said switchgear panel (2), to an external plate wall (8) of said enclosure (5), arranged externally with respect to said switchgear panel (2).

11. Protection filter assembly (1) according to claim 10, wherein said first filter baffle (15) extends parallel to said internal plate wall (7) or to said external plate wall (8).

12. Protection filter assembly (1) according to one or more of claims 4 to 11, wherein said mitigating barrier elements (12) are made of expanded or stretched metal plates obtained by multi-cut perforation and subsequent stretching of the material.

13. Protection filter assembly (1) according to one or more of the preceding claims, wherein said venting through openings (14) have dimensions such as to prevent passage of particles with diameter greater than 2.4 mm.

14. Protection filter assembly (1) according to one or more of the preceding claims, wherein said venting through openings (14) have dimensions such as to enable passage of particles with diameter up to about 1 mm.

15. Switchgear panel (2) comprising a protection filter assembly (1) according to one or more of the preceding claims.
